(19) Europäisches Patentamt / European Patent Office / Office européen des brevets

(11) **EP 3 409 713 B1**

(12) **EUROPEAN PATENT SPECIFICATION**

(45) Date of publication and mention
of the grant of the patent:
**15.06.2022 Bulletin 2022/24**

(21) Application number: **17744248.0**

(22) Date of filing: **25.01.2017**

(51) International Patent Classification (IPC):
*C08K 3/34* $^{(2006.01)}$    *C08K 3/40* $^{(2006.01)}$
*C08K 7/00* $^{(2006.01)}$    *C08J 5/00* $^{(2006.01)}$
*C08L 77/00* $^{(2006.01)}$    *G02B 7/02* $^{(2021.01)}$
*H04N 5/225* $^{(2006.01)}$

(52) Cooperative Patent Classification (CPC):
(C-Sets available)
**C08J 5/00; C08K 7/00; C08K 9/06; C08K 9/08;
C08L 77/00; G02B 7/02; H04N 5/225;** C08K 3/34;
C08K 3/40; C08K 2201/005; C08K 2201/014;
C08K 2201/016        (Cont.)

(86) International application number:
**PCT/JP2017/002509**

(87) International publication number:
**WO 2017/131018 (03.08.2017 Gazette 2017/31)**

(54) **MOLDED ARTICLE AND METHOD FOR PRODUCTION THEREOF**

FORMARTIKEL UND VERFAHREN ZUR HERSTELLUNG DAVON

ARTICLE MOULÉ ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2016 JP 2016016040**

(43) Date of publication of application:
**05.12.2018 Bulletin 2018/49**

(73) Proprietor: **Kuraray Co., Ltd.
Okayama 710-0801 (JP)**

(72) Inventors:
• **SUZUKI, Hideaki
Tsukuba-shi
Ibaraki 305-0841 (JP)**
• **TAMURA, Kozo
Tsukuba-shi
Ibaraki 305-0841 (JP)**
• **OMICHI, Hiroyuki
Tsukuba-shi
Ibaraki 305-0841 (JP)**

(74) Representative: **Müller-Boré & Partner
Patentanwälte PartG mbB
Friedenheimer Brücke 21
80639 München (DE)**

(56) References cited:
WO-A1-2007/111221    WO-A1-2013/080566
WO-A1-2013/128887    WO-A1-2013/150973
WO-A1-2015/159813    WO-A1-2015/159813
JP-A- 2000 212 437    JP-A- 2000 212 437
JP-A- 2013 209 622    JP-A- 2014 164 238
JP-A- 2014 164 238    JP-A- 2016 166 285
US-A1- 2009 088 515

(52) Cooperative Patent Classification (CPC): (Cont.)

C-Sets
**C08K 7/00, C08L 67/00;**
**C08K 7/00, C08L 69/00;**
**C08K 7/00, C08L 77/06;**
**C08K 9/06, C08L 77/06;**
**C08K 9/08, C08L 77/06**

## Description

Technical Field

The present invention relates to a molded article obtained by molding a thermoplastic resin composition and a method for producing the same. In detail, the present invention relates to a molded article having a thin wall part, which is obtained by molding a thermoplastic resin composition and is excellent in tensile characteristics, mechanical strength, and dimensional stability, and to a method for producing the same.

Background Art

Small-sized molded articles having a thin wall part, such as a barrel or a holder constituting a camera module component to be used for mobile phones or the like are liable to generate deformation, such a warp, etc., to be caused due to dimensional changes by molding shrinkage, overheating, or water absorption. Accordingly, for the purposes of controlling the molding shrinkage and improving the dimensional stability and stiffness, there are proposed molded articles reinforced with a filler, such glass flakes, etc.
For example, PTL 1 discloses that a molded article that is excellent in mechanical properties, exhibits a low warp, is improved in dimensional accuracy, and is desirable in appearance, etc. is obtained from an amorphous thermoplastic resin composition having glass flakes or glass flakes and a reinforcing filler compounded therewith.
PTL 2 discloses that a molded article obtained by using a polyamide resin composition composed of a mixed polyamide resin containing a crystalline polyamide resin and an amorphous polyamide resin and a plate-shaped silicate or glass flakes has a high stiffness, exhibits a low warp, and is excellent in appearance, such as surface smoothness, etc.
PTL 3 discloses a molded article composed of a thermoplastic resin composition containing a resin composition composed of a thermoplastic resin (component (a1)) having a glass transition temperature of 130°C or higher and a thermoplastic resin (component (a2)) other than the component (a1) in a weight ratio of the component (a1) and the component (a2) falling within a specified range; and specified glass flakes, which is excellent in dimensional stability, stiffness, and appearance, and which is controlled in clogging with the glass flakes in a gate part of the molded article, etc.
By using the resin composition containing a filler, such as glass flakes, etc., in the obtained molded article, the warp is controlled, and the mechanical strength and dimensional stability are improved. However, in small-sized molded articles having a thin wall part, such as a barrel or a holder constituting a camera module component to be used for mobile phones or the like, there is a fear that the focus is not right due to even slight dimensional changes, and friction in a screwing part between the barrel and the holder becomes problematic. Furthermore, by using glass flakes or the like as the filler, on producing a molded article, clogging is generated in the gate part or the like, so that occasionally, desirable moldability is not obtained.
PTL 4 discloses that a barrel or a holder of a camera module obtained by molding a polyamide composition prepared by melting a specified polyamide and a fibrous reinforcing material is excellent in dimensional anisotropy and detail filling properties; however, the dimensional stability is still insufficient for being applied to small-sized molded articles having a thin wall part.
JP 2014 164 238 discloses diaphragm mechanism members for lens barrels obtained by injection-molding an aromatic polycarbonate composition reinforced with surface-treated glass flakes, which is however silent as to a combination with mica.

Citation List

Patent Literature

PTL 1: JP 62-109855 A
PTL 2: JP 10-219105 A
PTL 3: JP 2002-146204 A
PTL 4: JP 2010-286544 A

Summary of Invention

Technical Problem

A problem of the present invention is to provide a molded article having a thin wall part, which is excellent in tensile characteristics, mechanical strength, and dimensional stability, and a method for producing the same.

Solution to Problem

The present inventors have found that when a molded article is constituted of a specified thermoplastic resin composition, and an inorganic filler to be contained in the thermoplastic resin composition satisfies a predetermined condition, the aforementioned problem can be solved.
The present invention is concerned with the subject-matter as claimed in claims 1-6.

Advantageous Effects of Invention

In accordance with the present invention, it is possible to provide a molded article having a thin wall part, which is excellent in the tensile characteristics, the mechanical strength, and the dimensional stability, and a method for producing the same. The molded article is suitable for camera module components.

Brief Description of Drawings

Fig. 1 is one examples of a diagrammatic view of a cross section of a camera module using a barrel or a holder as a camera module component.
Fig. 2 is a photograph taken with an optical microscope with respect to a test piece used for evaluation of detail moldability in Example 1 from an upper surface side thereof.
Fig. 3 is a photograph taken with an optical microscope with respect to a test piece used for evaluation of detail moldability in Example 2 from an upper surface side thereof.
Fig. 4 is a photograph taken with an optical microscope with respect to a test piece used for evaluation of detail moldability in Comparative Example 5 from an upper surface side thereof.

Description of Embodiments

[Molded Article]

The molded article of the present invention is a molded article obtained by molding a thermoplastic resin composition, wherein the thermoplastic resin composition contains a thermoplastic resin (A) and an inorganic filler (B) as defined in claim 1
The wording "molded article in which a thickness of the thinnest part thereof is 2.0 mm or less" as referred to in the present invention indicates a molded article in which a thickness of the thinnest portion (thinnest part) of the molded article is 2.0 mm or less and indicates one in which a part or the whole of the molded article is 2.0 mm or less. In the case where the molded article is a plate-shaped molded article having, for example, a tabular shape, a corrugated shape, a curved shape, or other shape, the wording "thickness of the thinnest part" as referred to in the present invention indicates a thickness of the thinnest portion of the foregoing plate-shaped molded article. In the case where the molded article is a non-plate-shaped molded article, for example, a molded article having a columnar shape, the thickness of the thinnest part indicates a diameter or a height of the column, whichever is the shorter distance.
The aspect ratio of the filler (b1) which is used in the present invention is represented by a ratio of an average major axis (L) to an average thickness (d) [L/d] of the filler (b1) (the ratio will be hereinafter also referred to simply as "aspect ratio"). The "average major axis" of the filler (b1) means an average value of the major axis of the plate-shaped inorganic filler (b1). The "average thickness" of the filler (b1) means an average value of a distance between an upper surface and a lower surface of the plate-shaped inorganic filler (b1). The average major axis (L) and the average thickness (d) of the filler (b1) which is used in the present invention are those measured by the methods described in the section of Examples.
The reasons why when the molded article of the present invention has the aforementioned constitution, the effects of the present invention are obtained may be considered as follows.
In the thermoplastic resin composition which is used for molding of the molded article of the present invention, the average thickness of the filler (b1) to be contained therein is thin, and the aspect ratio thereof is large. Accordingly, it may be considered that the thermoplastic resin composition is low in flow resistance at the time of molding and is filled into the details relative to a mold for a molded article having a thin wall part, and favorable moldability is obtained. In addition, because of a high reinforcing effect in the perpendicular direction to the thickness of the inorganic filler, it may be considered that the molded article has improved tensile characteristics and mechanical strength and excellent dimensional stability.

In the molded article of the present invention, the thickness of the thinnest part is 2.0 mm or less. The thickness of the thinnest part is preferably 1.0 mm or less, more preferably 500 $\mu$m or less, and even more preferably 300 $\mu$m or less from the viewpoints of thinning and weight reduction of the molded article, and is also preferably 10 $\mu$m or more, more preferably 50 $\mu$m or more, and even more preferably 150 $\mu$m or more from the viewpoints of easiness of manufacture and dimensional stability.

Though the shape of the molded article of the present invention is not particularly limited so long as it has the thinnest part having a thickness of 2.0 mm or less in at least a part of the molded article, from the viewpoint of being applied to a camera module component, such as a barrel, a holder, etc. (hereinafter also referred to simply as "camera module component"), a volume of the molded article is preferably 3.0 mm$^3$ or more, more preferably 5.0 mm$^3$ or more, and even more preferably 7.0 mm$^3$ or more, and is also preferably 50 mm$^3$ or less, more preferably 30 mm$^3$ or less, and even more preferably 20 mm$^3$ or less.

For example, in the case where the molded article has a complicated shape as in the camera module component, the thickness of the thinnest part of the molded article of the present invention can be measured with an optical microscope by using a sample obtained by embedding the molded article in a liquid silicone and immobilizing it.

The preparation of the sample which is used for the measurement is performed by sinking the molded article in a liquid silicone and solidifying it, followed by polishing. On this occasion, preferably, using a polishing machine, for example, "SP-150", manufactured by Subtech K.K., etc., rough polishing is performed with #400 until a distance of 1 mm to the target cross section as a measure, precision polishing is performed with #800 over 15 minutes until a distance of 0.5 mm to the target cross section as a measure, and finally, polishing is performed with #1000 until the target cross section.

<Thermoplastic Resin Composition>

The thermoplastic resin composition which is used for the molded article of the present invention contains the thermoplastic resin (A) and the filler (B) and can be obtained by, for example, kneading components containing the thermoplastic resin (A) and the filler (B).

[Thermoplastic Resin (A)]

The thermoplastic resin composition which is used for the molded article of the present invention contains the thermoplastic resin (A). The thermoplastic resin (A) is not particularly limited so long as the aforementioned effects can be given, and examples thereof include polycarbonate resins; polyphenylene oxide resins; polysulfone resins; polyether sulfone resins; polyarylate resins; cyclic polyolefin resins; polyether imide resins; polyamide resins; polyamide-imide resins; polyimide resins; liquid crystal polymers, such as aromatic polyesters, aromatic polyester amides, etc.; polyaminobismaleimide resins; polyetheretherketone resins; and the like. Among these resins, from the viewpoints of dimensional stability and heat resistance, at least one selected from the group consisting of liquid crystal polymers, such as aromatic polyesters, aromatic polyester amides, etc., polycarbonate resins, and polyamide resins is preferred; a polyamide resin is more preferred; and a semi-aromatic polyamide resin is even more preferred.

From the viewpoints of heat resistance and moldability, it is preferred that a melting point or glass transition temperature of the thermoplastic resin (A) is 130°C or higher. In the present invention, the matter that the "melting point or glass transition temperature is 130°C or higher" means that at least any one of the melting point and the glass transition temperature is 130°C or higher. The melting point or the glass transition temperature of the thermoplastic resin (A) is preferably 130°C or higher, more preferably 150°C or higher, and even more preferably 170°C or higher from the viewpoints of heat resistance and moldability, and is also preferably 350°C or lower, and more preferably 320°C or lower from the viewpoint of preventing heat decomposition of the resin at the time of molding. The melting point and the glass transition temperature in the present invention are those measured by the method described in the section of Examples.

(Semi-aromatic Polyamide)

The semi-aromatic polyamide as referred to in the present invention indicates a polyamide containing a dicarboxylic acid unit composed mainly of an aromatic dicarboxylic acid and a diamine unit composed mainly of an aliphatic diamine unit, or a polyamide containing a dicarboxylic acid unit composed mainly of an aliphatic dicarboxylic acid unit and a diamine unit composed mainly of an aromatic diamine unit. The wording "composed mainly of" as referred to herein indicates a constitution in which the content of the dicarboxylic acid unit or diamine unit is 50 to 100 mol%, and preferably 60 to 100 mol% in the total dicarboxylic acid units or total diamine units of the semi-aromatic polyamide.

In the thermoplastic resin (A) which is used in the present invention, the semi-aromatic polyamide is preferably a polyamide containing a dicarboxylic acid unit composed mainly of an aromatic dicarboxylic acid unit and a diamine unit composed mainly of an aliphatic diamine unit, and more preferably a semi-aromatic polyamide containing a dicarboxylic acid unit containing 50 to 100 mol% of a terephthalic acid unit and a diamine unit containing 60 to 100 mol% of an aliphatic diamine unit having a carbon number of 4 or more and 18 or less. The semi-aromatic polyamide is hereunder described in more detail.

As for the dicarboxylic acid unit that constitutes the semi-aromatic polyamide, the content of the terephthalic acid unit in the dicarboxylic acid unit is preferably 50 to 100 mol%. According to this, the heat resistance and dimensional stability of the obtained molded article are improved. The content of the terephthalic acid unit in the dicarboxylic acid unit is preferably 75 mol% or more, and more preferably 90 mol% or more, and is also preferably 100 mol% or less.

The dicarboxylic acid unit that constitutes the semi-aromatic polyamide may contain other dicarboxylic acid unit than the terephthalic acid unit in an amount of preferably less than 50 mol%. Examples of such other dicarboxylic acid unit may include units derived from aliphatic dicarboxylic acids, such as malonic acid, dimethylmalonic acid, succinic acid, glutaric acid, adipic acid, 2-methyladipic acid, trimethyladipic acid, pimelic acid, 2,2-dimethylglutaric acid, 2,2-diethylsuccinic acid, azelaic acid, sebacic acid, suberic acid, etc.; alicyclic dicarboxylic acids, such as 1,3-cyclopentanedicarboxylic acid, 1,4-cyclohexanedicarboxylic acid, etc.; aromatic dicarboxylic acids, such as isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, diphenylmethane-4,4'-dicarboxylic acid, diphenylsulfone-4,4'-dicarboxylic acid, 4,4'-biphenyldicarboxylic acid, etc.; and the like, and one or more of these units can be contained. The content of such other dicarboxylic acid unit in the dicarboxylic acid unit is preferably 25 mol% or less, and more preferably 10 mol% or less. Furthermore, a unit derived from polyvalent carboxylic acids, such as trimellitic acid, trimesic acid, pyromellitic acid, etc., may also be contained within a melt-moldable range.

It is preferred that the diamine unit that constitutes the semi-aromatic polyamide contains 60 to 100 mol% of the aliphatic diamine unit having a carbon number of 4 or more and 18 or less. When the semi-aromatic polyamide containing the aliphatic diamine unit having a carbon number of 4 or more and 18 or less in this proportion is used, a molded article having excellent tensile characteristics, mechanical strength, heat resistance, and dimensional stability is obtained. From the foregoing viewpoint, the content of the aliphatic diamine unit having a carbon number of 4 or more and 18 or less in the diamine unit is preferably 75 mol% or more, and more preferably 90 mol% or more, and is also preferably 100 mol% or less.

Examples of the aliphatic diamine unit having a carbon number of 4 or more and 18 or less may include units derived from linear-chain aliphatic diamines, such as 1,4-butanediamine, 1,5-pentanediamine, 1,6-hexanediamine, 1,7-heptadiamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, etc.; branched-chain aliphatic diamines, such as 2-methyl-1,3-propanediamine, 2-methyl-1,4-butanediamine, 2-methyl-1,5-pentanediamine, 3-methyl-1,5-pentanediamine, 2,2,4-trimethyl-1,6-hexanediamine, 2,4,4-trimethyl-1,6-hexanediamine, 2-methyl-1,8-octanediamine, 5-methyl-1,9-nonanediamine, etc.; and the like, and one or more of these units can be contained.

The aliphatic diamine unit having a carbon number of 4 or more and 18 or less is preferably an aliphatic diamine unit having a carbon number of 6 or more and 18 or less, and from the viewpoints of heat resistance and dimensional stability, it is more preferably a 1,9-nonanediamine unit and/or a 2-methyl-1,8-octanediamine unit, and even more preferably a 1,9-nonanediamine unit and a 2-methyl-1,8-octanediamine unit. In the case where the diamine unit contains both a 1,9-nonanediamine unit and a 2-methyl-1,8-octanediamine unit, a molar ratio of the 1,9-nonanediamine unit and the 2-methyl-1,8-octanediamine unit is preferably in a range of from 95/5 to 40/60, more preferably in a range of from 90/10 to 50/50, and even more preferably in a range of from 90/10 to 60/40 in terms of a (1,9-nonanediamine unit/2-methyl-1,8-octanediamine unit) ratio.

The diamine unit that constitutes the semi-aromatic polyamide may contain other diamine unit than the aliphatic diamine unit having a carbon number of 4 or more and 18 or less in an amount of preferably less than 40 mol%. Examples of such other diamine unit may include units derived from aliphatic diamines having a carbon number of 3 or less, such as ethylenediamine, 1,2-propanediamine, 1,3-propanediamine, etc.; alicyclic diamines, such as cyclohexanediamine, methylcyclohexanediamine, isophoronediamine, etc.; aromatic diamines, such as p-phenylenediamine, m-phenylenediamine, xylylenediamine, 4,4'-diaminodiphenylmethane, 4,4'-diaminodiphenylsulfone, 4,4'-diaminodiphenyl ether, etc.; and the like, and one or more of these units can be contained. From the foregoing viewpoint, the content of such other diamine unit in the diamine unit is preferably 25 mol% or less, and more preferably 10 mol% or less.

The semi-aromatic polyamide may also contain an amino carboxylic acid unit within a range where the effects of the present invention are not impaired. Examples of the amino carboxylic acid unit may include units derived from 11-aminoundecanoic acid, 12-aminododecanoic acid, and the like, and two or more aminocarboxylic acid units may also be contained. The content of the aminocarboxylic acid unit in the semi-aromatic polyamide is preferably 40 mol% or less, more preferably 20 mol% or less, and even more preferably 10 mol% or less based on 100 mol% of the whole of the monomer units that constitute the semi-aromatic polyamide.

The semi-aromatic polyamide may also contain a lactam unit within a range where the effects of the present invention are not impaired. Examples of the lactam unit may include units derived from ε-caprolactam, enantholactam, undecane lactam, lauryl lactam, α-pyrrolidone, α-piperidone, and the like, and two or more lactam units may also be contained. The content of the lactam unit in the semi-aromatic polyamide is preferably less than 40 mol%, more preferably 20 mol% or less, and even more preferably 10 mol% or less based on 100 mol% of the whole of the monomer units that constitute the semi-aromatic polyamide.

Representative examples of the semi-aromatic polyamide containing a dicarboxylic acid unit composed mainly of an aromatic dicarboxylic acid unit and a diamine unit composed mainly of an aliphatic diamine unit include polyhexamethylene terephthalamide (polyamide 6T), polynonamethylene terephthalamide (polyamide 9T), polydecamethylene terephthalamide (polyamide 10T), polyhexamethylene isophthalamide (polyamide 6I), a copolymer of polyamide 6I and polyamide 6T (polyamide 6I/6T), a copolymer of polyamide 6T and polyundecanamide (polyamide 11) (polyamide 6T/11), and the like.

Meanwhile, among the semi-aromatic polyamides, with respect to the semi-aromatic polyamide containing a dicarboxylic acid unit composed mainly of an aliphatic dicarboxylic acid unit and a diamine unit composed mainly of an aromatic diamine unit, examples of the aliphatic dicarboxylic acid unit may include units derived from the aforementioned aliphatic dicarboxylic acids, and one or more of these units can be contained. In addition, examples of the aromatic diamine unit may include units derived from the aforementioned aromatic diamines, and one or more of these units can be contained. The semi-aromatic polyamide containing a dicarboxylic acid unit composed mainly of an aliphatic dicarboxylic acid unit and a diamine unit composed mainly of an aromatic diamine unit, may also contain other units within a range where the effects of the present invention are not impaired In addition, representative examples of the semi-aromatic polyamide containing a dicarboxylic acid unit composed mainly of an aliphatic dicarboxylic acid unit and a diamine unit composed mainly of an aromatic diamine unit include polymetaxylylene adipamide (MXD6), polyparaxylylene sebacamide (PXD10), and the like.

In the semi-aromatic polyamide, it is preferred that 10% or more of terminal groups of its molecular chain are capped with an end-capping agent. A proportion at which the terminal groups of the molecular chain are capped with the end-capping agent (end capping ratio) is more preferably 20% or more. By using a semi-aromatic polyamide in which 10% or more of the terminal groups of the molecular chain are capped with the end-capping agent, namely a semi-aromatic polyamide having an end capping ratio of 10% or more, a molded article that is more excellent in melt stability, hot water resistance, and so on is obtained.

Though the end-capping agent is not particularly limited so long as it is a monofunctional compound having reactivity with an amino group or carboxyl group of the polyamide terminal, in view of reactivity, stability of the capped ends, and so on, a monocarboxylic acid or a monoamine is preferred, and in view of easiness of handling and so on, a monocarboxylic acid is more preferred. Besides, monoisocyanates, mono-acid halides, monoesters, monoalcohols, and the like can also be used as the end-capping agent.

The monocarboxylic acid which is used as the end-capping agent is not particularly limited so long as it has reactivity with the amino group, and examples thereof may include aliphatic monocarboxylic acids, such as acetic acid, propionic acid, butyric acid, valeric acid, caproic acid, caprylic acid, lauric acid, tridecanoic acid, myristic acid, palmitic acid, stearic acid, pivalic acid, isobutyric acid, etc.; alicyclic monocarboxylic acids, such as cyclohexanecarboxylic acid, etc.; aromatic monocarboxylic acids, such as benzoic acid, toluic acid, α-naphthalenecarboxylic acid, β-naphthalenecarboxylic acid, methylnaphthalenecarboxylic acid, phenylacetic acid, etc.; arbitrary mixtures thereof; and the like. Among these monocarboxylic acids, acetic acid, propionic acid, butyric acid, valeric acid, caproic acid, caprylic acid, lauric acid, tridecanoic acid, myristic acid, palmitic acid, stearic acid, and benzoic acid are preferred from the viewpoints of reactivity, stability of the capped ends, price, and so on.

The monoamine which is used as the end-capping agent is not particularly limited so long as it has reactivity with the carboxyl group, and examples thereof may include aliphatic monoamines, such as methylamine, ethylamine, propylamine, butylamine, hexylamine, octylamine, decylamine, stearylamine, dimethylamine, diethylamine, dipropylamine, dibutylamine, etc.; alicyclic monoamines, such as cyclohexylamine, dicyclohexylamine, etc.; aromatic monoamines, such as aniline, toluidine, diphenylamine, naphthylamine, etc.; arbitrary mixtures thereof; and the like. Among these monoamines, butylamine, hexylamine, octylamine, decylamine, stearylamine, cyclohexylamine, and aniline are preferred from the viewpoints of reactivity, boiling point, stability of the capped ends, price, and so on.

By measuring the number of each of the carboxyl group terminals and the amino group terminals existing in the semi-aromatic polyamide as well as the terminal groups capped by the end-capping agent, the end capping ratio can be determined according to the following formula (1). In view of precision and simplicity, it is preferred that the number of the respective terminal groups is determined on the basis of an integrated value of characteristic signals corresponding to the respective terminal groups by means of $^1$H-NMR.

$$\text{End capping ratio (\%)} = [(T - S)/T] \times 100 \qquad (1)$$

In the formula, T represents a total number of terminal groups of the molecular chain of the polyamide (typically, this is equal to two times of the number of polyamide molecules); and S represents a sum total number of the carboxyl group terminals and the amino group terminals remaining without being capped.

The semi-aromatic polyamide can be produced by an arbitrary method which is known as the method for producing a polyamide. So far as a polyamide containing a dicarboxylic acid unit and a diamine unit is concerned, it can be, for example, produced by a method, such as a solution polymerization method or an interfacial polymerization method, each using an acid chloride and a diamine as raw materials; a melt polymerization method, a solid-phase polymerization method, or a melt extrusion polymerization method, each using a dicarboxylic acid and a diamine as raw materials; etc.

On the occasion of producing the semi-aromatic polyamide, phosphoric acid, phosphorous acid, hypophosphorous acid, and a salt or ester thereof, or the like can be added as a catalyst. Examples of the aforementioned salt or ester include salts of phosphoric acid, phosphorous acid, or hypophosphorous acid with a metal, such as potassium, sodium, magnesium, vanadium, calcium, zinc, cobalt, manganese, tin, tungsten, germanium, titanium, antimony, etc.; ammonium salts of phosphoric acid, phosphorous acid, or hypophosphorous acid; an ethyl ester, an isopropyl ester, a butyl ester, a hexyl ester, an isodecyl ester, a decyl ester, a stearyl ester, or a phenyl ester of phosphoric acid, phosphorous acid, or hypophosphorous acid; and the like. Among these, sodium hypophosphite or phosphorous acid is preferred because it is inexpensive and low in a triamine amount.

As for the semi-aromatic polyamide, its intrinsic viscosity [$\eta$] measured in concentrated sulfuric acid under a condition at 30°C is preferably in a range of from 0.6 to 2.0 dL/g, more preferably in a range of from 0.7 to 1.9 dL/g, and even more preferably in a range of from 0.8 to 1.8 dL/g. When a semi-aromatic polyamide having an intrinsic viscosity of 0.6 dL/g or more is used, the mechanical strength of the obtained molded article becomes favorable. In addition, when a semi-aromatic polyamide having an intrinsic viscosity of 2.0 dL/g or less is used, the moldability is favorable.

[Inorganic Filler (B)]

The thermoplastic resin composition which is used in the present invention contains the thermoplastic resin (A) and the inorganic filler (B) (filler (B)), wherein the content of the filler (B) is 60 to 150 parts by mass based on 100 parts by mass of the thermoplastic resin (A).

The content of the filler (B) based on 100 parts by mass of the thermoplastic resin (A) is preferably 70 parts by mass or more, and more preferably 80 parts by mass or more from the viewpoints of tensile characteristics and mechanical strength, and is also preferably 130 parts by mass or less, and more preferably 120 parts by mass or less from the viewpoints of moldability, tensile characteristics, mechanical strength, and dimensional stability.

(Plate-shaped Inorganic Filler (b1))

The filler (B) which is used in the present invention contains 35 to 100% by mass of the plate-shaped inorganic filler (b1) (filler (b1)) having an average thickness of 4.0 $\mu$m or less and an aspect ratio of 130 or : more and 300 or less

In view of the fact that the filler (B) before melt kneading contains the filler (b1), it may be considered that the resin composition is filled even into the details relative to a mold for a molded article having a thin wall part, and favorable moldability is obtained. In addition, because of a high reinforcing effect in the perpendicular direction to the thickness of the filler (b1), it may be considered that the obtained molded article has improved tensile characteristics and mechanical strength and excellent dimensional stability.

The content of the filler (b1) in the filler (B) which is used in the present invention is preferably 40% by mass or more, and more preferably 45% by mass or more from the viewpoints of moldability, tensile characteristics, mechanical strength, and dimensional stability, and is also preferably 80% by mass or less, and more preferably 70% by mass or less from the viewpoint of moldability.

From the viewpoints of moldability, tensile characteristics, mechanical strength, and dimensional stability, the filler (b1) which is used in the present invention is glass flakes. . From the viewpoint of enhancing the dispersibility into the thermoplastic resin (A), the surface of the filler (b1) is subjected to a surface treatment with a silane coupling agent or a titanium coupling agent.

The filler (b1) can be used either alone or in combination of two or more thereof.

The average thickness of the filler (b1) is preferably 3.0 $\mu$m or less, more preferably 2.0 $\mu$m or less, more preferably 1.0 $\mu$m or less, and further even more preferably 0.8 $\mu$m or less from the viewpoints of moldability, tensile characteristics, mechanical strength, and dimensional stability, and is also preferably 0.1 $\mu$m or more, more preferably 0.3 $\mu$m or more, and more preferably 0.5 $\mu$m or more from the viewpoints of easiness of manufacture and workability.

The average major axis of the filler (b1) is preferably 100 $\mu$m or more, more preferably 130 $\mu$m or more, and even more preferably 150 $\mu$m or more from the viewpoints of moldability, tensile characteristics, mechanical strength, and dimensional stability, and is also preferably 200 $\mu$m or less, more preferably 190 $\mu$m or less, and even more preferably

170 μm or less from the viewpoints of easiness of manufacture and workability.

The aspect ratio of the filler (b1) is preferably 150 or more, more preferably 180 or more, even more preferably 200 or more, and further even more preferably 220 or more from the viewpoints of moldability, tensile characteristics, mechanical strength, and dimensional stability, and is also preferably 300 or less, more preferably 250 or less, and even more preferably 240 or less from the viewpoint of easiness of manufacture.

(Inorganic Filler (b2))

From the viewpoints of moldability and dimensional stability of the details, the filler (B) which is used in the present invention further contains 10 to 65% by mass of an inorganic filler (b2) (hereinafter also referred to simply as "filler (b2)") other than the filler (b1) and having an average major axis of 1.0 to 50 μm. In view of the fact that the filler (B) before melt kneading contains the filler (b2), the thermoplastic resin composition is filled even into the details relative to a mold for a minute molded article having a thin wall part, and the moldability of the details is more improved. Furthermore, in view of the fact that the : filler (b2) is introduced into voids among the filler (b1), the dimensional stability of the details of the molded article is more improved.

The content of the filler (b2) in the filler (B) which is used in the present invention is preferably 10% by mass or more, more preferably 20% by mass or more, and even more preferably 30% by mass or more from the viewpoints of moldability and dimensional stabilizer, and is also preferably 65% by mass or less, more preferably 60% by mass or less, even more preferably 50% by mass or less, and especially preferably 40% by mass or less from the viewpoint of mechanical strength.

From the viewpoints of moldability, tensile characteristics, mechanical strength, and dimensional stability, the filler (b2) which is used in the present invention is mica.

When mica is used as the filler (b2), it may be considered that in the case of producing the thermoplastic resin composition by means of melt kneading, the mica is cleaved (separated stratiformly) during melt kneading, and the dimensional stability is improved.

From the viewpoint of enhancing the dispersibility into the thermoplastic resin (A), the surface of the filler (b2) may be subjected to a surface treatment with a silane coupling agent, a titanium coupling agent, other polymer, or a low-molecular compound.

The average major axis of the filler (b2) is 1.0 to 50 μm, preferably 1.0 μm or more, more preferably 3.0 μm or more, even more preferably 5.0 μm or more, further even more preferably 10 μm or more, and especially preferably 15 μm or more from the viewpoint of easiness of manufacture, and is also preferably 50 μm or less, more preferably 40 μm or less, even more preferably 30 μm or less, and further even more preferably 25 μm or less from the viewpoints of dimensional stability and mechanical strength.

The average thickness of the filler (b2) is preferably 3.0 μm or less, more preferably 2.0 μm or less, and even more preferably 1.0 μm or less from the viewpoints of moldability and dimensional stability, and is also preferably 0.1 μm or more, more preferably 0.3 μm or more, even more preferably 0.5 μm or more from the viewpoint of easiness of manufacture.

The aspect ratio of the filler (b2) is preferably 5.0 or more, more preferably 10 or more, even more preferably 20 or more, and further even more preferably 25 or more from the viewpoints of moldability and dimensional stability, and is also preferably 50 or less, more preferably 40 or less, and even more preferably 30 or less from the viewpoint of easiness of manufacture.

The aspect ratio of the filler (b2) which is used in the present invention is represented by a ratio of an average major axis (L) to an average thickness (d) [L/d] of the filler (b2). In the case where the filler (b2) is spherical, the "average major axis" of the filler (b2) means an average value of the diameter of the filler (b2); and in the case where the filler (b2) is non-spherical, it means an average value of the major axis of the fibber (b2). In the case where the filler (b2) is spherical, the "average thickness" of the filler (b2) means an average value of the diameter of the filler (b2); in the case where the filler (b2) is non-spherical, it means an average value of the minor axis of the filler (b2); and in the case where the filler (b2) is plate-shaped, it means an average value of a distance between an upper surface and a lower surface of the filler (b2).

The average major axis (L) and the average thickness (d) of the filler (b2) which is used in the present invention are those measured by the methods described in the section of Examples.

From the viewpoints of moldability, mechanical strength, and dimensional stability, a ratio of the average major axis of the filler (b1) to the average major axis of the filler (b2) [L(b1)/L(b2)] is preferably 1.0 or more, more preferably 3.0 or more, and even more preferably 5.0 or more, and is also preferably 30 or less, more preferably 20 or less, even more preferably 15 or less, and further even more preferably 10 or less.

A sum total content of the fillers (b1) and (b2) in the filler (B) is preferably 90% by mass or more, more preferably 95% by mass or more, and even more preferably 98% by mass or more from the viewpoints of moldability, tensile characteristics, mechanical strength, and dimensional stability, and is also preferably 100% by mass or less, and more preferably substantially 100% by mass from the same viewpoints.

From the viewpoints of dimensional stability and mechanical strength, a mass ratio of the filler (b1) to the filler (b2) [(b1)/(b2)] is preferably 10/90 to 90/10, more preferably 20/80 to 80/20, even more preferably 30/70 to 70/30, and further even more preferably 35/65 to 65/35.

As for the filler (B) which is used in the present invention, from the viewpoints of moldability and dimensional stability, the filler (b1) is glass flakes, and the filler (b2) is mica.

From the viewpoints of moldability, tensile characteristics, mechanical strength, and dimensional stability, the filler (B) which is used in the present invention may contain other inorganic filler than the fillers (b1) and (b2).

Examples of the other inorganic filler than the fillers (b1) and (b2) include fibrous inorganic fillers, such as glass fiber, asbestos fiber, carbon fiber, graphite fiber, metal fiber, aluminum borate whisker, magnesium-based whisker, silicon-based whisker, wollastonite, imogolite, sepiolite, slag fiber, xonotlite, gypsum fiber, silica fiber, silica-alumina fiber, zirconia fiber, boron nitride fiber, silicon nitride fiber, boron fiber, etc.; powdered inorganic fillers, such as calcium carbonate, wollastonite, silica, silica alumina, alumina, titanium dioxide, potassium titanate, magnesium hydroxide, molybdenum disulfide, etc.; and the like.

From the viewpoints of moldability, tensile characteristics, mechanical strength, and dimensional stability, the content of the other inorganic filler than the fillers (b1) and (b2) in the filler (B) to be used in the present invention is preferably 10% by mass or less, more preferably 5.0% by mass or less, and even more preferably 2.0% by mass or less.

A sum total amount of the thermoplastic resin (A) and the filler (B) in the thermoplastic resin composition is preferably 90% by mass or more, more preferably 95% by mass or more, and even more preferably 97% by mass or more from the viewpoints of moldability, tensile characteristics, mechanical strength, and dimensional stability, and is also preferably 100% by mass or less, and more preferably 99% by mass or less from the same viewpoints.

[Other Components]

If desired, the thermoplastic resin composition which is used in the present invention may contain other components, such as carbon black, other resin than the thermoplastic resin (A), a stabilizer to heat, light, or oxygen, a copper-based stabilizer, a release agent, a coloring agent, an antistatic agent, a plasticizer, a lubricant, a flame retardant, a flame retardant aid, etc.

In the case where the thermoplastic resin composition which is used in the present invention is used for molding a molded article for a camera module component, such as a barrel, a holder, etc., it preferably contains carbon black from the viewpoint of light shielding properties. The content of the carbon black in the thermoplastic resin composition is preferably 0.5 parts by mass or more, more preferably 1.0 part by mass or more, and even more preferably 1.5 parts by mass or more, and is also preferably 7.0 parts by mass or less, more preferably 5.0 parts by mass or less, and even more preferably 3.0 parts by mass or less, based on 100 parts by mass of the thermoplastic resin (A). When the carbon black is contained within the aforementioned range, a molded article that is excellent in light shielding properties can be obtained, and in a camera module component, such as a barrel, a holder, etc., it is possible to prevent leakage of external light into an imaging device of the camera module through the barrel or holder. When the content of the carbon black is excessively high, there is a case where a lowering in moldability of the thermoplastic resin composition, or a lowering in insulating properties, mechanical strength, or the like of the barrel or holder is generated.

Examples of the other resin than the thermoplastic resin (A) include polyether resins, such as polyacetal, polyphenylene oxide, etc.; polysulfone resins, such as polysulfone, polyether sulfone, etc.; polythioether-based resins, such as polyphenylene sulfide, polythioether sulfone, etc.; polyketone-based resins, such as polyetheretherketone, polyallyl ether ketone, etc.; polynitrile-based resins, such as polyacrylonitrile, polymethacrylonitrile, an acrylonitrile-styrene copolymer, an acrylonitrile-butadiene-styrene copolymer, a methacrylonitrile-butadiene-styrene copolymer, etc.; polymethacrylate -based resins, such as polymethyl methacrylate, polyethyl methacrylate, etc.; polyvinyl ester-based resins, such as polyvinyl acetate, etc.; polyvinyl chloride-based resins, such as polyvinylidene chloride, polyvinyl chloride, a vinyl chloride-vinylidene chloride copolymer, a vinylidene chloride-methyl acrylate copolymer, etc.; cellulose-based resins, such as cellulose acetate, cellulose butyrate, etc.; fluorine-based resins, such as polyvinylidene fluoride, polyvinyl fluoride, an ethylene-tetrafluoroethylene copolymer, polychlorotrifluoroethylene, an ethylene-chlorotrifluoroethylene copolymer, a tetrafluoroethylene-hexafluoropropylene copolymer, a tetrafluoroethylene-hexafluoropropylene-vinylidene fluoride copolymer, etc.; polycarbonate-based resins; polyimide-based resins, such as thermoplastic polyimide, polyamide-imide, polyether imide, etc.; thermoplastic polyurethane resins; and the like.

The stabilizer to heat, light, or oxygen is not particularly limited so long as it is one that is typically used, and examples thereof include a hindered phenol-based compound, a hindered amine-based compound, a phenylene diamine-based compound, a phenol-based compound, a benzotriazole-based compound, a benzophenone compound, a phenyl salicylate compound, an epoxy compound, a phosphite-based compound, a phosphonite-based compound, a phosphorus-based compound, a thio-based compound, a thioether-based compound, a tin compound, a metal halide, and the like. Preferred are halides (for example, chlorides, bromides, iodides) of a metal belonging to the Group I of the periodic table (for example, sodium, potassium, lithium), copper(I) halides (for example, copper(I) chloride, copper(I) bromide, copper(I) iodide), and combinations of a halide of a metal belonging to the Group I of the periodic table and a copper(I) halide, with copper(I) halides being more preferred.

A compound having a long-chain aliphatic hydrocarbon structure may be compounded as the release agent. Specifically, examples thereof include salts of a metal (e.g., calcium, etc.), esters, polyethylene waxes, polypropylene waxes, and the like of a higher fatty acid, such as stearic acid, montanic acid, etc., and the like.

The plasticizer is not particularly limited so long as it is one that is typically used as a plasticizer for thermoplastic resins, and examples thereof include a benzenesulfonic acid alkyl amide-based compound, a toluenesulfonic acid alkyl amide-based compound, a hydroxybenzoic acid alkyl ester-based compound, and the like.

The lubricant is not particularly limited so long as it is one that is typically used as a lubricant for thermoplastic resins, and examples thereof include a higher fatty acid-based compound, an oxy fatty acid-based compound, a fatty acid amide-based compound, an alkylenebis fatty acid amide-based compound, a fatty acid lower alcohol ester-based compound, a metallic soap-based compound, a polyolefin wax, and the like. Above all, a fatty acid amide-based compound, for example, stearic acid amide, palmitic acid amide, methylenebisstearylamide, ethylenebisstearylamide, etc., is preferred because it is excellent in an external lubricating effect.

The content of such other components in the thermoplastic resin composition which is used in the present invention is preferably 30 parts by mass or less, more preferably 20 parts by mass or less, and even more preferably 10 parts by mass or less based on 100 parts by mass of the thermoplastic resin (A).

<Production Method of Thermoplastic Resin Composition>

The molded article of the present invention is one obtained by molding the thermoplastic resin composition containing the thermoplastic resin (A) and the inorganic filler (B) (filler (B)) and optionally, the aforementioned other components.

The resin composition can be obtained by compounding the thermoplastic resin (A) and the filler (B) and optionally, the aforementioned other components and dry blending them, followed by melt kneading.

Though the kind of the apparatus to be used for melt kneading, the melt kneading condition, and so on are not particularly limited, examples of the apparatus include a single-screw extruder, a twin-screw extruder, a kneader, a mixing roll, a Banbury mixer, an injection molding machine, and the like. In addition, examples of the melt kneading condition include a condition under which the kneading is performed at a temperature within a range of from about 280 to 350°C for 1 to 30 minutes.

In the case where the thermoplastic resin (A) is a semi-aromatic polyamide, so long as there is no inconvenience from the process standpoint, the filler (B) may be compounded at a polymerization stage of the semi-aromatic polyamide, or may be compounded in the molten semi-aromatic polyamide on the way of an extruder by using a side feeder. Furthermore, the dry blended semi-aromatic polyamide and the filler (B) may be used as they are without being melt kneaded.

The "melt kneading" as referred to in the present specification means kneading to be performed under a condition under which at least one of the components to be kneaded, and preferably at least the thermoplastic resin (A) is melted.

[Production Method of Molded Article]

The molded article of the present invention is obtained by a production method of molding a thermoplastic resin as defined in claim 6

The molded article of the present invention can be obtained by using the aforementioned thermoplastic resin composition as a raw material through a typical melt molding method, compression molding method, injection molding method, or extrusion molding method, or the like. For example, the molded article can be produced by melting the aforementioned thermoplastic resin composition in a cylinder of an injection molding machine in which a cylinder temperature is adjusted to 280 to 340°C and introducing (injecting) the melt into a mold. The shape of the mold is not particularly limited so long as it is a shape such that the obtained molded article has the thinnest part of 2.0 mm or less.

From the viewpoints of quality stability of the product, easiness of handling, and so on, it is preferred to use, as the thermoplastic resin composition, a pellet obtained by melt kneading of a dry blend of the thermoplastic resin (A) and the filler (B) by using a twin-screw extruder with high kneading capability.

Furthermore, as for the melt kneading for obtaining the thermoplastic resin composition, it is also possible to perform molding as it is by using an injection molding machine.

The molded article of the present invention is a molded article obtained by molding the aforementioned thermoplastic resin composition and is excellent in tensile characteristics, mechanical strength, and dimensional stability. Therefore, the molded article of the present invention is useful as a molded article in which a thickness of the thinnest part thereof is 2.0 mm or less, for example, connectors, such as an FPC connector, a BtoB connector, a card connector, an SMT connector (e.g., a coaxial connector, etc.), a memory card connector, etc.; SMT relays; SMT bobbins; sockets, such as a memory socket, a CPU socket, etc.; switches, such as a command switch, an SMT switch, etc.; optical components, such as an optical fiber component, an optical sensor, etc.; components for LED applications, such as an LED reflector, etc.; electronic substrates, such as a solar cell substrate, an LED mounting substrate, a flexible printed wiring board, a resin-molding circuit substrate, etc.; camera module components, such as a barrel, a holder, a base, etc.; mobile phone components; automobile components, such as a throttle body, a bus bar insert molded article, etc.; and the like.

[Camera Module Component]

The molded article of the present invention is suitable as a camera module component, such as a barrel, a holder, a base, etc., and more suitable as a barrel or a holder that constitutes the camera module component.

The camera module component made of the molded article of the present invention is not particularly limited so long as a thickness of the thinnest part of the foregoing component is 2.0 mm or less. The preferred thickness of the thinnest part and volume of the camera module component are the same as those in the aforementioned molded article. In addition, the molding method of the camera module component is also the same as that in the aforementioned molded article.

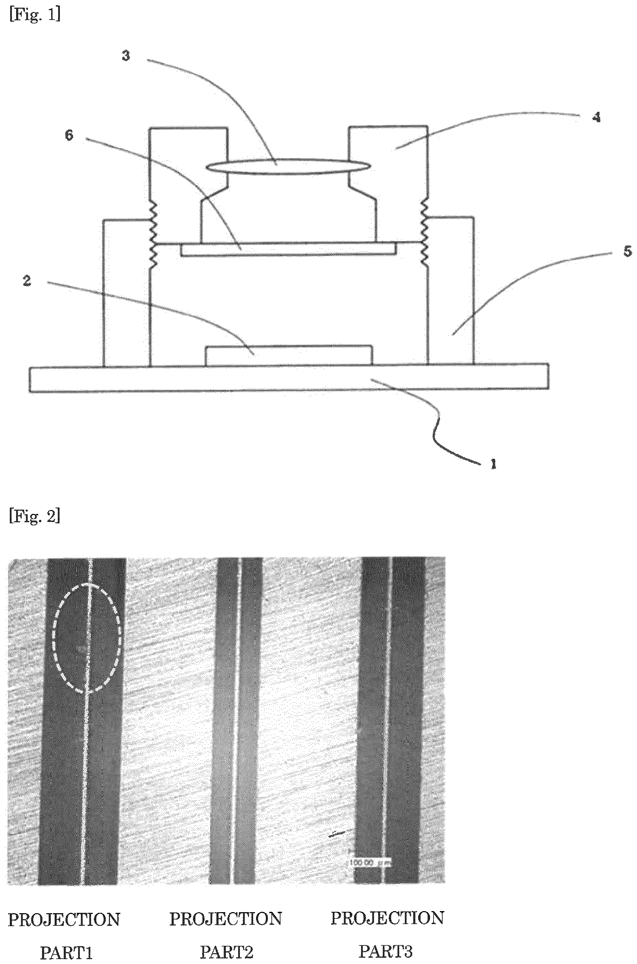

Examples of the camera module component include a barrel or a holder that constitutes a camera module, as in one example of a diagrammatic view of a cross section thereof is shown in Fig. 1. In Fig. 1, a cylindrical barrel 4 having a lens 3 installed therein is rotatably screwed with an upper screw of a holder 5. In addition, an imaging device 2, such as CCD, CMOS, etc., is installed on a substrate 1. An IR cut filter 6 is installed between the lens 3 and the imaging device 2. Light having passed through the lens 3 goes through the IR cut filter 6 and reaches the imaging device 2. Here, when the barrel 4 is rotated, a distance between the lens 3 and the imaging device 2 changes, whereby the focus of the camera module can be adjusted.

In the camera module, it is preferred that any one of the barrel and the holder is the molded article of the present invention, and it is more preferred that both the barrel and the holder are the molded article of the present invention. Even in the case where the barrel and the holder are integrated, and the integrated material having the barrel and the holder integrated with each other is obtained by molding the aforementioned thermoplastic resin composition, the foregoing integrated material is included in the scope of the present invention.

Examples

The present invention is hereunder described in more detail by reference to Examples and Comparative Examples, but it should be construed that the present invention is not limited to these Examples.

The respective evaluations of the thermoplastic resin (A) and the inorganic filler (B) used in the Examples and Comparative Examples were performed according to the following methods.

(Average Major Axis of Inorganic Filler (B))

A median diameter D50 on a volume basis as measured using a particle diameter distribution measuring apparatus (a model name: "Microtrac MT3300", manufactured by Nikkiso Co., Ltd.) by the laser diffraction scattering method was defined as the average major axis of the inorganic filler (B).

(Average Thickness of Inorganic Filler (B))

An SEM image of the filler (B) was photographed with an electron microscope (a model name: "VE9800", manufactured by Keyence Corporation); with respect to ten plate-shaped filler particles as arbitrarily extracted on the photographed image, a distance between two points of an upper surface and a lower surface was measured using an image analysis software fitted as standard equipment in VE9800; and an average value thereof was defined as the average thickness of the inorganic filler (B).

(Melting Point and Glass Transition Temperature of Thermoplastic Resin (A))

The melting point of a polyamide (PA9T as described later) used as the thermoplastic resin (A) was determined in a manner that a peak temperature of a melting peak appearing at the time of raising the temperature from 30°C to 360°C at a rate of 10°C/min in a nitrogen atmosphere by using a differential scanning calorimetry analyzer (DSC822), manufactured by Mettler-Toledo K.K. was defined as the melting point (°C). In the case where a plurality of melting peaks appeared, a peak temperature of a melting peak on the highest temperature side was defined as the melting point.

Thereafter, the sample was completely melted by holding at a temperature higher by 30°C than the melting point for 10 minutes and then cooled to 40°C at a rate of 10°C/min, followed by holding at 40°C for 10 minutes. When the sample was again subjected to temperature rise to a temperature higher by 30°C than the melting point at a rate of 10°C/min, an intermediate point at which the DSC curve changed stepwise was defined as the glass transition temperature.

Production Example 1

Components other than the filler (B) were supplied in the composition shown in Table 1 into a twin-screw extruder, manufactured by Toshiba Machine Co., Ltd. (screw diameter: 26 mmφ, L/D = 46, rotation number: 150 rpm, discharge amount: 10 kg/h) from a hopper of the most upstream part thereof, and the filler (B) was supplied from a side feeder, followed by melt kneading. The melt-kneaded thermoplastic resin composition was extruded in a strand form, cooled, and then cut to obtain a pellet of the thermoplastic resin composition.

Production Examples 2 to 3

Pellets of the thermoplastic resin composition were each obtained in the same method as in Production Example 1, except for changing the kind and compounding amount of the filler (B) as shown in Table 1.

Comparative Production Examples 1 to 6

Pellets of the thermoplastic resin composition were each obtained in the same method as in Production Example 1, except for changing the composition as shown in Table 1.

Examples 1 to 3 and Comparative Examples 1 to 6 (Example 1 is comparative and Examples 2 and 3 are according to the invention)

The pellet of the thermoplastic resin composition obtained in each of the Production Examples and Comparative Production Examples was used and evaluated as a molded article in the following methods.

In Examples 1 to 3, the pellets obtained in Production Examples 1 to 3 were used, respectively. In addition, in Comparative Examples 1 to 6, the pellets obtained in Comparative Production Examples 1 to 6 were used, respectively.

[Evaluation 1: Tensile Characteristics and Mechanical Strength]

The pellet of the thermoplastic resin composition obtained in each of the Production Examples and Comparative Production Examples was used and subjected to injection molding at a temperature higher by 10°C than the melting point of the polyamide used, thereby preparing a test piece (JIS K7162, No. 1 dumbbell type, thickness: 3 mm) (injection rate: 40 mm/s, dwell pressure: 700 kg/cm$^2$, mold temperature: 140°C; the resin was filled in one direction from an end part of the dumbbell). The obtained test piece was used and evaluated by the following methods. The results are shown in Table 1.

(Tensile Strength)

The aforementioned test piece was used and measured for the tensile strength by using an autograph (manufactured by Shimadzu Corporation) in conformity with JIS K7161. The matter that the tensile strength is 100 MPa or more reveals a favorable performance with respect to the evaluation for a dropping test, etc. as a camera module component and indicates that the sample can be put into practical use.

(Tensile Elongation)

The aforementioned test piece was used and measured for the tensile elongation by using an autograph (manufactured by Shimadzu Corporation) in conformity with JIS K7161. The higher the numerical value, the more excellent the tensile characteristics.

(Weld Strength)

A test piece was prepared under the same condition, except for filling the resin from both ends of a mold having the same shape as the aforementioned test piece. On this occasion, an interface at which the resins were joined was defined as a weld part and measured for the weld strength by using an autograph (manufactured by Shimadzu Corporation) in conformity with JIS K7161. The higher the numerical value, the more excellent the mechanical strength.

[Evaluation 2: Dimensional Stability]

The pellet of the thermoplastic resin composition obtained in each of the Production Examples and Comparative Production Examples was used and subjected to injection molding at a temperature higher by 10°C than the melting point of the polyamide used (injection rate: 50 mm/s, dwell pressure: 300 kg/cm$^2$, mold temperature: 140°C, mold: a mold having a space part in a rectangular parallelepiped shape of 1 mm in thickness, 40 mm in width, and 100 mm in length, and having a gate in one surface of 1 mm $\times$ 40 mm), thereby obtaining a tabular molded article having the thinnest part of 2.0 mm or less. The obtained molded article was used and evaluated by the following methods. The results are shown in Table 1.

(Molding Shrinkage Rate)

The above-obtained tabular molded article was used and measured for the molding shrinkage rate according to the following formula, while defining the injection direction as the MD direction and the direction parallel to the tabular surface and perpendicular to the injection direction as the TD direction, respectively.

$$\text{Molding shrinkage rate (\%)} = \{(\text{Dimensions of mold}) - (\text{Dimensions of molded article})\} \times 100/(\text{Dimensions e of mold})$$

(Dimensional Change Rate)

The above-obtained tabular molded article was used and held at 85°C and 85% RH for 168 hours, and then measured for the dimensional change rate (%) of the molded article before and after the holding treatment in each of the MD direction and the TD direction.

(Heating Change Rate)

A sample obtained by using the above-obtained tabular molded article and heat treating it with a reflow apparatus having a highest reach temperature of 260°C under the following reflow condition was measured for the heating change rate (%) in each of the MD direction and the TD direction.
Reflow condition: The sample was subjected to temperature rise from 25°C to 150°C over 60 seconds, subsequently subjected to temperature rise to 180°C over 90 seconds, and further subjected to temperature rise to 260°C over 60 seconds. Thereafter, the sample was held at 260°C for 20 second and then cooled from 260°C to 100°C over 30 seconds. After the temperature reached 100°C, air was sealed, and the resulting sample was subjected to natural cooling to 23°C.

[Evaluation 3: Detail Moldability]

The pellet of the thermoplastic resin composition obtained in each of the Production Examples and Comparative Production Examples was used and subjected to injection molding at a temperature higher by 20°C than the melting point of the polyamide used (injection rate: 50 mm/s, dwell pressure: 800 kg/cm$^2$, mold temperature: 140°C), thereby obtaining a test piece provided with three triangular prism-shaped projections having a size different from each other (projection 1: 400 $\mu$m in width and 150 $\mu$m in height, projection 2: 200 $\mu$m in width and 150 $\mu$m in height, and projection 3: 300 $\mu$m in width and 250 $\mu$m in height) on the tabular surface as shown in Figs. 2 to 4, respectively. The state of the aforementioned projection was observed from the upper surface side of the test piece by using an optical microscope (a model name: "VHX-900", manufactured by Keyence Corporation), thereby evaluating the detail moldability. The evaluation criteria are shown below. The matter that the evaluation is B or more indicates that the sample can be put into practical use. The results are shown in Table 1.

A: A chip is not observed at all in the projection.
B: A chip is substantially not observed in the projection.
C: A chip is observed in the projection.

[Evaluation 4: Impact Resistance]

A notched Izod impact value was measured in conformity with the Izod impact strength: ASTM D256. The higher the numerical value, the more excellent the impact resistance. The results are shown in Table 1.

Table 1

| | | | | Example | | | Comparative Example | | | | | |
|---|---|---|---|---|---|---|---|---|---|---|---|---|
| | | | | 1 | 2 | 3 | 1 | 2 | 3 | 4 | 5 | 6 |
| Composition (parts by mass) | Thermoplastic resin (A) | | PA9T | 50 | 50 | 50 | 50 | 50 | 50 | 100 | 50 | 50 |
| | Inorganic filler (B) | (b1) | Glass flakes 1 | 50 | 20 | 30 | | | | | | |
| | | | Glass flakes 2 | | | | 50 | | | | | |
| | | | Glass flakes 3 | | | | | 50 | | | | |
| | | (b2) | Mica | | 30 | 20 | | | 50 | | | |
| | | Mass ratio [(b1)/(b2)] | | | 40/60 | 60/40 | | | | | | |
| | Other components | Glass fiber | | | | | | | | | 50 | |
| | | Wollastonite | | | | | | | | | | 50 |
| | | Antioxidant | | 0.2 | 0.2 | 0.2 | 0.2 | 0.2 | 0.2 | 0.2 | 0.2 | 0.2 |
| | | Carbon black | | 1 | 1 | 1 | 1 | 1 | 1 | 1 | 1 | 1 |
| | | Release agent | | 0.3 | 0.3 | 0.3 | 0.3 | 0.3 | 0.3 | 0.3 | 0.3 | 0.3 |
| Evaluation | Tensile strength | (MPa) | | 140 | 104 | 106 | 73 | 56 | 92 | 85 | 205 | 103 |
| | Tensile elongation | (%) | | 2.5 | 2.0 | 1.5 | 1.2 | 1.1 | 1.6 | 12.0 | 3.0 | 1.7 |
| | Weld strength | (MPa) | | 35 | 25 | 25 | 29 | 38 | 23 | 83 | 30 | 24 |
| | Molding shrinkage rate | (%) | MD | 0.10 | 0.14 | 0.10 | 0.15 | 0.51 | 0.18 | 1.50 | 0.04 | 0.10 |
| | | | TD | 0.11 | 0.25 | 0.19 | 0.25 | 0.60 | 0.20 | 1.50 | 0.72 | 0.64 |
| | Dimensional change rate | (%) | MD | -0.05 | -0.03 | -0.04 | -0.12 | -0.06 | -0.02 | 1.56 | -0.04 | -0.03 |
| | | | TD | -0.03 | -0.05 | -0.06 | -0.10 | -0.01 | 0.03 | 1.56 | -0.16 | -0.09 |
| | Heating change rate | (%) | MD | 0.04 | 0.10 | 0.11 | 0.30 | 0.09 | 0.15 | *1 | 0.05 | 0.10 |
| | | | TD | 0.11 | 0.11 | 0.19 | 0.23 | 0.12 | 0.15 | *1 | 0.29 | 0.28 |
| | Detail moldability | | | B | A | A | B | B | B | A | C | B |
| | Izod impact value (notched) kJ/m$^2$ | | | 2.9 | 1.7 | 2.0 | 2.6 | 1.5 | 1.3 | 2.5 | 12.2 | 1.8 |

*1: In Comparative Example 4, the shrinkage at the time of molding was excessively large, and therefore, the evaluation of the heating change rate was not performed.

The respective components shown in Table 1 are as follows.

[Thermoplastic resin (A)]

- PA9T: "Genestar GC31110", manufactured by Kuraray Co., Ltd., PA9T (a polyamide containing, as the dicarboxylic acid unit, a terephthalic acid unit and, as the diamine unit, a 1,9-nonanediamine unit and a 2-methyl-1,8-octanediamine unit (molar ratio: 85/15), melting point: 305°C, glass transition temperature: 125°C

[Inorganic filler (B)]

- Glass flakes 1: "MEG160FY-M03", manufactured by Nippon Sheet Glass Co., Ltd., average major axis: 160 $\mu$m, average thickness: 0.7 $\mu$m, aspect ratio = 229; one treated with aminosilane and polyurethane
- Glass flakes 2: "REFG-315", manufactured by Nippon Sheet Glass Co., Ltd., average major axis: 160 $\mu$m, average thickness: 5 $\mu$m, aspect ratio = 32; one treated with aminosilane and polyurethane
- Glass flakes 3: "REF-015", manufactured by Nippon Sheet Glass Co., Ltd., average major axis: 15 $\mu$m, average thickness: 5 $\mu$m, aspect ratio = 3; one treated with aminosilane
- Mica: "KWM-325S", manufactured by Kinsei Matec Co., Ltd., average major axis: 20 $\mu$m, average thickness: 0.7 $\mu$m, aspect ratio = 29; one treated with aminosilane

[Other components]

- Glass fiber: "03JA-FT2A", manufactured by Owens Corning Corporation
- Wollastonite: "Nyglos 4W", manufactured by NYCO Minerals, Inc., average major axis: 8 $\mu$m, average thickness: 4.5 $\mu$m, aspect ratio = 1.8
- Antioxidant: "SUMILIZER GA-80", manufactured by Sumitomo Chemical Co., Ltd.
- Carbon black: "#980B", manufactured by Mitsubishi Chemical Corporation
- Release agent: Polypropylene (general type), "NP055", manufactured by Mitsui Chemicals, Inc.

As shown in Table 1, it has been noted from comparison between the Examples and the Comparative Examples that Examples 1 to 3 are excellent in a balance among the tensile characteristics, the mechanical strength, the dimensional stability, and the moldability.
Examples 1 to 3 are more excellent in the tensile characteristics and the dimensional stability than Comparative Examples 1 to 2.
Examples 1 to 3 are more excellent in the tensile strength, the mechanical strength, and the dimensional stability than Comparative Example 3.
Examples 1 to 3 are more excellent in the tensile strength and the dimensional stability than Comparative Example 4.
Examples 1 to 3 are more excellent in the dimensional stability and the moldability than Comparative Example 5.
Examples 1 to 3 are more excellent in the dimensional stability than Comparative Example 6.

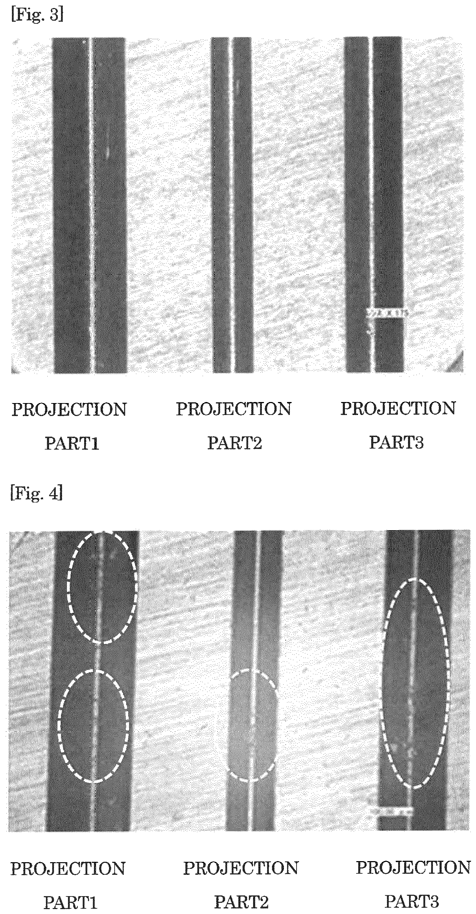

Fig. 4 is a photograph taken with an optical microscope with respect to a test piece used in the test for detail moldability in Comparative Example 5 using the glass fiber that is other inorganic filler without using the fillers (b1) and (b2) from an upper surface side thereof. In addition, Fig. 2 is a similar photograph in Example 1 using the glass flakes 1 as the filler (b1) but not using the filler (b2); and Fig. 3 is a similar photograph in Example 2 using the glass flakes 1 as the filler (b1) and mica as the filler (b2).
As compared with Examples 1 and 2, in Comparative Example 5, the reflection of light of the optical microscope is poor as in the regions surrounded by the broken line parts in Fig. 4, and a lot of gloomy portions are existent. It has been noted from this matter that in Comparative Example 5, the filling properties of the thermoplastic resin composition in the details of the mold are poor, and a lot of chips are observed in the projections.
On the other hand, as compared with Example 2, in Example 1, an upper part of the leftmost end projection is observed gloomy as in the regions surrounded by the broken line parts in Fig. 2. It has been noted from this matter that by jointly using, as the inorganic filler (B), the filler (b1) and the filler (b2), namely jointly using the glass flakes and mica, the filling properties in the details of the mold are more improved.

The molded article according to the present invention is excellent in the tensile characteristics, the mechanical strength, and the dimensional stability.

Industrial Applicability

In accordance with the present invention, it is possible to provide a molded article having a thin wall part, which is excellent in the tensile characteristics, the mechanical strength, and the dimensional stability, and a method for producing the same. The molded article is particularly suitable for camera module components, such as a barrel, a holder, etc.

Reference Signs List

1:   Substrate
2:   Imaging device
3:   Lens
4:   Barrel
5:   Holder
6:   IR cut filter

**Claims**

1.  A molded article obtained by molding a thermoplastic resin composition, wherein

    the thermoplastic resin composition comprises a thermoplastic resin (A) and an inorganic filler (B);
    the content of the inorganic filler (B) is from 60 to 150 parts by mass based on 100 parts by mass of the thermoplastic resin (A);
    the content of a plate-shaped inorganic filler (b1) having an average thickness of 4.0 $\mu$m or less and an aspect ratio of 130 or more and 300 or less in the inorganic filler (B) is 35 to 100% by mass;
    the average thickness of the plate-shaped inorganic filler (b1) is an average value of a distance between two points of an upper surface and a lower surface with respect to ten plate-shaped filler particles as arbitrarily extracted on the photographed image photographed with an electron microscope;
    a thickness of the thinnest part thereof is 2.0 mm or less;
    the inorganic filler (B) further contains 10 to 65% by mass of an inorganic filler (b2) other than the plate-shaped inorganic filler (b1) and having an average major axis of 1.0 to 50 $\mu$m;
    the average major axis of the inorganic filler (B) is a median diameter D50 on a volume basis as measured by the laser diffraction scattering method;
    the plate-shaped inorganic filler (b1) is glass flakes, and the inorganic filler (b2) is mica;
    and
    the surface of the filler (b1) is subjected to a surface treatment with a silane coupling agent or a titanium coupling agent.

2.  The molded article according to claim 1, wherein a melting point or a glass transition temperature of the thermoplastic resin (A) is 130°C or higher and 350°C or less; and
    the melting point of the thermoplastic resin (A) is determined in a manner that a peak temperature of a melting peak appearing at the time of raising the temperature from 30°C to 360°C at a rate of 10°C/min in a nitrogen atmosphere by using a differential scanning calorimetry analyzer is defined as the melting point, and the glass transition temperature is determined as described in the description.

3.  The molded article according to claim 1 or 2, wherein the thermoplastic resin (A) is at least one selected from the group consisting of a liquid crystal polymer, a polycarbonate resin, and a polyamide resin.

4.  The molded article according to any of claims 1 to 3, wherein the thermoplastic resin (A) is a semi-aromatic polyamide resin.

5.  The molded article according to any of claims 1 to 4, which is a camera module component.

6. A method for producing a molded article, comprising molding a thermoplastic resin composition obtained by compounding a thermoplastic resin (A) and an inorganic filler (B), wherein

the compounding amount of the inorganic filler (B) is from 60 to 150 parts by mass based on 100 parts by mass of the thermoplastic resin (A),

the inorganic filler (B) is one compounded with 35 to 100% by mass of a plate-shaped inorganic filler (b1) having an average thickness of 4.0 $\mu$m or less and an aspect ratio of 130 or more and 300 or less,

the average thickness of the plate-shaped inorganic filler (b1) is an average value of a distance between two points of an upper surface and a lower surface with respect to ten plate-shaped filler particles as arbitrarily extracted on the photographed image photographed with an electron microscope;

a thickness of the thinnest part of the molded article is 2.0 mm or less, the inorganic filler (B) further contains 10 to 65% by mass of an inorganic filler (b2) other than the plate-shaped inorganic filler (b1) and having an average major axis of 1.0 to 50 $\mu$m;

the average major axis of the inorganic filler (B) is a median diameter D50 on a volume basis as measured by the laser diffraction scattering method;

the plate-shaped inorganic filler (b1) is glass flakes, and the inorganic filler (b2) is mica;

and

the surface of the filler (b1) is subjected to a surface treatment with a silane coupling agent or a titanium coupling agent.

## Patentansprüche

1. Formgegenstand, erhalten durch Formen einer thermoplastischen Harzzusammensetzung, wobei

die thermoplastische Harzzusammensetzung ein thermoplastisches Harz (A) und einen anorganischen Füllstoff (B) umfasst;

der Gehalt des anorganischen Füllstoffs (B) von 60 bis 150 Massenteile, bezogen auf 100 Massenteile des thermoplastischen Harzes (A), beträgt;

der Gehalt eines plättchenförmigen anorganischen Füllstoffs (b1) mit einer durchschnittlichen Dicke von 4,0 $\mu$m oder weniger und einem Seitenverhältnis von 130 oder mehr und 300 oder weniger in dem anorganischen Füllstoff (B) 35 bis 100 Massen-% beträgt;

die durchschnittlichen Dicke des plättchenförmigen anorganischen Füllstoffs (b1) ein Durchschnittswert einer Distanz zwischen zwei Punkten einer oberen Oberfläche und einer unteren Oberfläche, bezogen auf zehn plättchenförmige Füllstoffteilchen, wie zufällig auf dem mit einem Elektronenmikroskop fotografierten Bild entnommen, ist;

eine Dicke des dünnsten Teils davon 2,0 mm oder weniger beträgt;

der anorganische Füllstoff (B) weiter 10 bis 65 Massen-% eines anorganischen Füllstoffs (b2) enthält, der anders als der plättchenförmige anorganische Füllstoff (b1) ist und eine durchschnittliche Hauptachse von 1,0 bis 50 $\mu$m aufweist;

die durchschnittliche Hauptachse des anorganischen Füllstoffs (B) ein Mediandurchmesser D50 auf einer Volumenbasis ist, wie durch das Laserbeugungsstreuungsverfahren gemessen;

der plättchenförmige anorganische Füllstoff (b1) Glasflocken ist und der anorganische Füllstoff (b2) Glimmer ist; und

die Oberfläche des Füllstoffs (b1) einer Oberflächenbehandlung mit einem Silankupplungsreagenz oder einem Titankupplungsreagenz unterzogen ist.

2. Formgegenstand nach Anspruch 1, wobei ein Schmelzpunkt oder eine Glasübergangstemperatur des thermoplastischen Harzes (A) 130°C oder höher und 350°C oder weniger beträgt; und
der Schmelzpunkt des thermoplastischen Harzes (A) in einer Weise bestimmt wird, dass eine Peaktemperatur eines Schmelzpeaks, der zum Zeitpunkt des Erhöhens der Temperatur von 30°C auf 360°C bei einer Rate von 10°C/min in einer Stickstoffatmosphäre unter Verwendung eines Differenzialrasterkalorimetrie-Messgeräts auftritt, als der Schmelzpunkt definiert ist, und die Glasübergangstemperatur wie in der Beschreibung beschrieben bestimmt wird.

3. Formgegenstand nach Anspruch 1 oder 2, wobei das thermoplastische Harz (A) mindestens eines, ausgewählt aus der Gruppe, bestehend aus einem Flüssigkristallpolymer, einem Polycarbonatharz und einem Polyamidharz, ist.

4. Formgegenstand nach einem der Ansprüche 1 bis 3, wobei das thermoplastische Harz (A) ein halbaromatisches Polyamidharz ist.

5. Formgegenstand nach einem der Ansprüche 1 bis 4, der ein Kameramodulbauteil ist.

6. Verfahren zur Herstellung eines Formgegenstands, umfassend Formen einer thermoplastischen Harzzusammensetzung, die durch Mischen eines thermoplastischen Harzes (A) und eines anorganischen Füllstoffs (B) erhalten wird, wobei

die Mischmenge des anorganischen Füllstoffs (B) von 60 bis 150 Massenteile, bezogen auf 100 Massenteile des thermoplastischen Harzes (A), beträgt; der anorganische Füllstoff (B) einer ist, der mit 35 bis 100 Massen-% eines plättchenförmigen anorganischen Füllstoffs (b1) mit einer durchschnittlichen Dicke von 4,0 μm oder weniger und einem Seitenverhältnis von 130 oder mehr und 300 oder weniger gemischt ist;
die durchschnittlichen Dicke des plättchenförmigen anorganischen Füllstoffs (b1) ein Durchschnittswert einer Distanz zwischen zwei Punkten einer oberen Oberfläche und einer unteren Oberfläche, bezogen auf zehn plättchenförmige Füllstoffteilchen, ist, wie zufällig auf dem mit einem Elektronenmikroskop fotografierten Bild entnommen;
eine Dicke des dünnsten Teils des Formgegenstands 2,0 mm oder weniger beträgt;
der anorganische Füllstoff (B) weiter 10 bis 65 Massen-% eines anorganischen Füllstoffs (b2) enthält, der anders als der plättchenförmige anorganische Füllstoff (b1) ist und eine durchschnittliche Hauptachse von 1,0 bis 50 μm aufweist;
die durchschnittliche Hauptachse des anorganischen Füllstoffs (B) ein Mediandurchmesser D50 auf einer Volumenbasis ist, wie durch das Laserbeugungsstreuungsverfahren gemessen;
der plättchenförmige anorganische Füllstoff (b1) Glasflocken ist und der anorganische Füllstoff (b2) Glimmer ist; und
die Oberfläche des Füllstoffs (b1) einer Oberflächenbehandlung mit einem Silankupplungsreagenz oder einem Titankupplungsreagenz unterzogen ist.

**Revendications**

1. Article moulé obtenu par moulage d'une composition de résine thermoplastique, dans lequel

la composition de résine thermoplastique comprend une résine thermoplastique (A) et une charge inorganique (B) ;
la teneur en charge inorganique (B) va de 60 à 150 parties en masse, sur base de 100 parties en masse de la résine thermoplastique (A) ;
la teneur en charge inorganique en plaquettes (b1) d'une épaisseur moyenne de 4,0 μm ou moins et d'un rapport de forme de 130 ou plus et de 300 ou moins dans la charge inorganique (B), va de 35 à 100% en masse ;
l'épaisseur moyenne de la charge inorganique en plaquettes (b1) est la valeur moyenne d'une distance entre deux points d'une surface supérieure et d'une surface inférieure par rapport à dix particules de charge en plaquettes telles qu'extraites de manière arbitraire sur une image photographique photographiée à l'aide d'un microscope électronique ;
une épaisseur de la partie la plus fine est de 2,0 mm ou moins ;
la charge inorganique (B) contient en outre 10 à 65% en masse d'une charge inorganique (b2) autre que la charge inorganique en plaquettes (b1) et qui présente un grand axe moyen de 1,0 à 50 μm ;
le grand axe moyen de la charge inorganique (B) est un diamètre médian D50 sur base volumique telle que mesurée par méthode de diffusion par diffraction laser ;
la charge inorganique en plaquettes (b) sont des flocons de verre, et la charge inorganique (b2) est du mica ; et
la surface de la charge (b1) est soumise à un traitement de surface avec un agent de couplage silane ou un agent de couplage titane.

2. Article moulé selon la revendication 1, dans lequel un point de fusion ou une température de transition vitreuse de la résine thermoplastique (A) est de 130°C ou plus et de 350°C ou moins ; et
le point de fusion de la résine thermoplastique (A) est déterminé d'une manière qu'une température de crête d'un pic de fusion apparaissant au moment où la température augmente de 30°C à 360°C à une vitesse de 10°C/min dans une atmosphère azotée en utilisant un analyseur par analyse calorimétrique différentielle, est définie comme le point de fusion et la température de transition vitreuse est déterminée comme c'est décrit dans la description.

3. Article moulé selon la revendication 1 ou 2, dans lequel la résine thermoplastique (A) est au moins l'un sélectionné parmi le groupe consistant en un polymère à cristaux liquides, une résine de polycarbonate et une résine de polyamide.

4. Article moulé selon l'une quelconque des revendications 1 à 3, dans lequel la résine thermoplastique (A) est une résine de polyamide semi-aromatique.

5. Article moulé selon l'une quelconque des revendications 1 à 4, lequel est un composant de module de caméra.

6. Procédé de production d'un article moulé, comprenant le moulage d'une composition de résine thermoplastique obtenue par compoundage d'une résine thermoplastique (A) et d'une charge inorganique (B), dans lequel la quantité de compoundage de la charge inorganique (B) va de 60 à 150 parties en masse, sur base de 100 parties en masse de la résine thermoplastique (A) ;

la charge inorganique (B) en est une composée de 35 à 100% en masse d'une charge inorganique en plaquettes (b1) d'une épaisseur moyenne de 4,0 $\mu$m ou moins et d'un rapport de forme de 130 ou plus et de 300 ou moins, l'épaisseur moyenne de la charge inorganique en plaquettes (b1) est la valeur moyenne d'une distance entre deux points d'une surface supérieure et d'une surface inférieure par rapport à dix particules de charge en plaquettes telles qu'extraites de manière arbitraire sur une image photographique photographiée à l'aide d'un microscope électronique ;
l'épaisseur de la partie la plus fine de l'article moulé est de 2,0 mm ou moins,
la charge inorganique (B) contient en outre 10 à 65% en masse d'une charge inorganique (b2) autre que la charge inorganique en plaquettes (b1) et qui présente un grand axe moyen de 1,0 à 50 $\mu$m ;
le grand axe moyen de la charge inorganique (B) est un diamètre médian D50 sur une base volumique telle que mesurée par méthode de diffusion par diffraction laser ; la charge inorganique en plaquettes (b) sont des flocons de verre, et la charge inorganique (b2) est du mica ;
et
la surface de la charge (b1) est soumise à un traitement de surface avec un agent de couplage silane ou un agent de couplage titane.

[Fig. 1]

[Fig. 2]

PROJECTION      PROJECTION      PROJECTION

PART1           PART2           PART3

[Fig. 3]

| PROJECTION | PROJECTION | PROJECTION |
| PART1 | PART2 | PART3 |

[Fig. 4]

| PROJECTION | PROJECTION | PROJECTION |
| PART1 | PART2 | PART3 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014164238 B
- JP 62109855 A
- JP 10219105 A
- JP 2002146204 A
- JP 2010286544 A